(19) Europäisches Patentamt

European Patent Office

Office européen des brevets

(11) **EP 0 777 130 B1**

(12) **EUROPÄISCHE PATENTSCHRIFT**

(45) Veröffentlichungstag und Bekanntmachung des Hinweises auf die Patenterteilung:
**13.11.2002   Patentblatt 2002/46**

(51) Int Cl.⁷: **G01S 7/292**

(21) Anmeldenummer: **96119057.6**

(22) Anmeldetag: **28.11.1996**

(54) **Digitales Verfahren zur Detektion zeitlich kurzer Pulse und Anordnung zur Durchführung des Verfahrens**

Digital method for detecting temporally short pulses, and device for performing the method

Procédé digital de détection d'impulsions courtes et appareil pour la mise en oeuvre du procédé

(84) Benannte Vertragsstaaten:
**DE FR GB NL SE**

(30) Priorität: **02.12.1995   DE 19545022**

(43) Veröffentlichungstag der Anmeldung:
**04.06.1997   Patentblatt 1997/23**

(73) Patentinhaber: **EADS Deutschland GmbH**
**81663 München (DE)**

(72) Erfinder: **Wolf, Günter, Dipl.-Ing.**
**89231 Neu-Ulm (DE)**

(74) Vertreter: **Meel, Thomas et al**
**Patentassessor,**
**c/o Dornier GmbH**
**L H G**
**88039 Friedrichshafen (DE)**

(56) Entgegenhaltungen:
**DE-A- 4 344 022          US-A- 5 349 567**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung geht aus von einem digitalen Verfahren zur Detektion zeitlich kurzer Pulse nach dem Oberbegriff des Patentanspruchs 1 und einer Anordnung zur Durchführung des Verfahrens nach dem Oberbegriff des Patentanspruchs 7.

In der Nachrichtentechnik, insbesondere der Radartechnologie, ist es in vielen Fällen erforderlich, kurze Pulse mit gewisser Längenvariation zu detektieren, das heißt zu erkennen und/oder zu markieren. Dabei sollen die kurzen Pulse auch bei einem möglichst geringen Störspannungsabstand (S/N-Verhältnis) und/oder bei dem Vorhandensein zeitlich langer Pulse zuverlässig erkannt werden.

Es ist naheliegend, zu einer solchen Detektion ein Hochpaßfilter mit einer geeignet gewählten unteren Grenzfrequenz sowie einer nachgeschalteten Schwellwertschaltung, z.B. zur Unterdrückung des Amplitudenrauschens, zu verwenden.

Bei einem solchen Verfahren sind Grenzfrequenz und Schwellwert in nachteiliger Weise lediglich mit einem hohem technischen Aufwand änderbar, insbesondere dann, wenn diese Werte in einem weiten Bereich sowie zeitlich schnell geändert werden müssen.

Dieser Nachteil kann vermieden werden mit einer Filterbank, die mehrere Einzelfilter mit jeweils fest eingestellter Grenzfrequenz enthält, sowie einem gesteuertem Schwellwertschalter mit zugehöriger Steuerschaltung. Ein solches Verfahren ist ebenfalls in nachteiliger Weise technisch aufwendig und daher kostenungünstig.

Aus der DE-A-43 44 02 ist weiterhin ein Verfahren bekannt, bei dem mittels eines sogenannten Ordered-Statistics-Verfahren (geordnete Statistik Verfahren) ein Schwellwert gebildet wird. Dieser Schwellwert ermöglicht eine weitgehende Anpassung an ein zeitabhängiges Amplituden(Betrags-)Signal, dem zu detektierende zeitlich kurze Pulse überlagert sind.

Der Erfindung liegt die Aufgabe zugrunde, ein weiteres gattungsgemäßes Verfahren anzugeben, welches eine gute und schnelle Anpassung an zu detektierende Kurzpulse ermöglicht.

Der Erfindung liegt außerdem die Aufgabe zugrunde, eine Anordnung zur Durchführung eines solchen Verfahrens anzugeben.

Diese Aufgabe wird gelöst durch die in den kennzeichnenden Teilen der Patentansprüche 1 und 7 angegebenen Merkmale.

Vorteilhafte Ausgestaltungen und/oder Weiterbildungen sind den Unteransprüchen entnehmbar.

Ein erster Vorteil besteht darin, daß das Verfahren mit ein und derselben Einstellung die gleichzeitige Detektierung von verschiedenlangen Kurzpulsen erlaubt.

Ein zweiter Vorteil der Erfindung besteht darin, daß im wesentlichen von einem Takt gesteuerte elektronische Bausteine und/oder Baugruppen verwendet werden. Durch Änderung der Taktfrequenz ist in einem weiten Bereich eine Anpassung an die zu detektierende Pulslänge möglich.

Ein dritter Vorteil besteht darin, daß ansonsten bei einem Hochpaß-Filter vorhandene Einschwingzeiten weniger auftreten, so daß eine schnellere Änderung und/oder Anpassung an sich ändernde Parameter, z.B. sich sprunghaft änderndes Amplitudenrauschen, ermöglicht wird.

Ein vierter Vorteil besteht darin, daß der Schwellwert in weiten Grenzen automatisch an die sich ändernde Amplitudenwerte des Rauschens angepaßt wird.

Ein fünfter Vorteil besteht darin, daß die Schaltungsanordnung mit wenigen Baugruppen in integrierter Technologie ausführbar ist, so daß eine leichte, mechanisch robuste, zuverlässige sowie kostengünstige Anordnung möglich ist.

Weitere Vorteile ergeben sich aus der nachfolgenden Beschreibung.

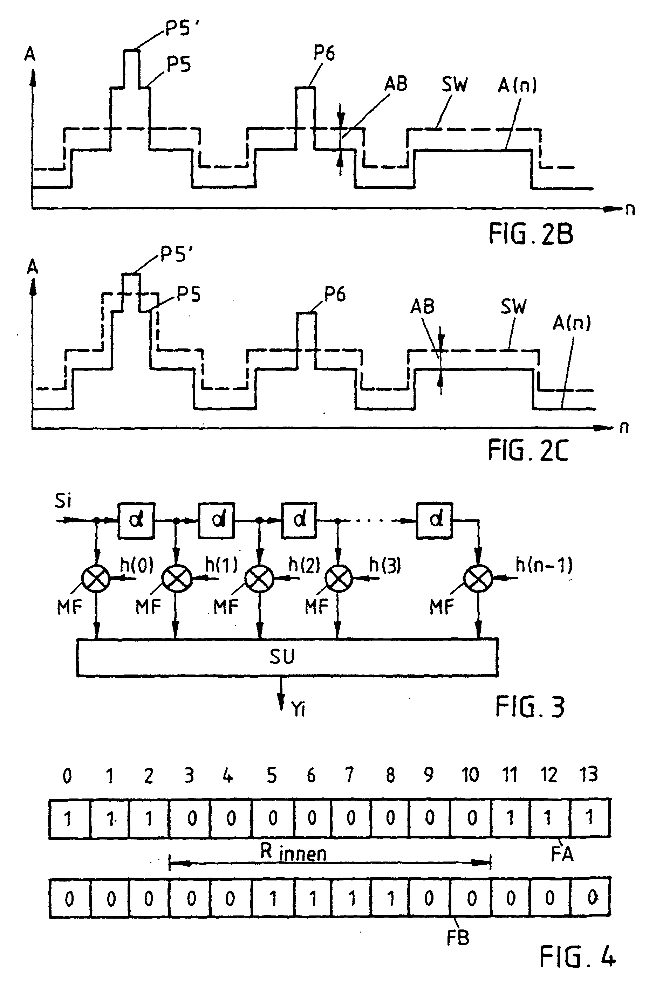

Die Erfindung beruht auf der Verwendung von mindestens zwei an sich bekannten FIR-Filtern ("Finite Impulse Response"). Ein FIR-Filter ist schematisch in FIG. 3 dargestellt. Die Funktion besteht darin, daß an einem Eingang anliegende zeitliche äquidistante Pulse $S_i$, beispielsweise von einem Analog/Digital-Wandler mit nachgeschaltetem Betragsbildner erzeugte Abtastwerte, einer Reihenschaltung aus an sich gleichen Verzögerungsgliedern d zugeführt werden. Diese verzögern jeweils ein anliegendes Signal (Puls) um eine Taktperiode, beispielsweise diejenige, mit welcher die Abtastwerte erzeugt werden. Der unverzögerte Puls und die nach jedem Verzögerungsglied d entstehenden verzögerten Pulse werden jeweils einem Eingang eines Multiplikators MF zugeführt. Dem jeweils anderen Eingang der Multiplikatoren MF werden vorgebbare Koeffizienten $h(0)$ bis $h(n-1)$ zugeführt, wobei n die Anzahl der Stufen des FIR-Filters bedeutet. Durch die Koeffizienten $h(0)$ bis $h(n-1)$ ist die gewünschte Charakteristik des FIR-Filters einstellbar. Die Ausgangssignale der Multiplikatoren MF werden einem gemeinsamen Summierglied SU zugeführt, an dessen Ausgang das Ausgangssignal $Y_i$ des FIR-Filters entsteht.

Solche FIR-Filter werden beispielsweise in Radartechnologie für das sogenannte CFAR-Verfahren ("Constant False Alarm Rate") verwendet.

Mit solchen FIR-Filtern ist es nun in überraschender Weise möglich, einen Detektor für Pulse mit vorgebbarer maximaler Pulslänge aufzubauen. Dabei wird die Pulslänge in Einheiten eines Taktes bestimmt, beispielsweise desjenigen, mit welchem die Abtastwerte eines Analog/Digital-Wandlers entstehen.

Die Erfindung wird im folgenden anhand eines Ausführungsbeispieles unter Bezugnahme auf schematisch dargestellte weitere Figuren näher erläutert. Es zeigen:

FIG. 1                ein Blockbild des Ausführungsbeispiels

FIG. 2A bis 2C,    FIG. 4 Diagramme zur Erläuterung der Erfindung.

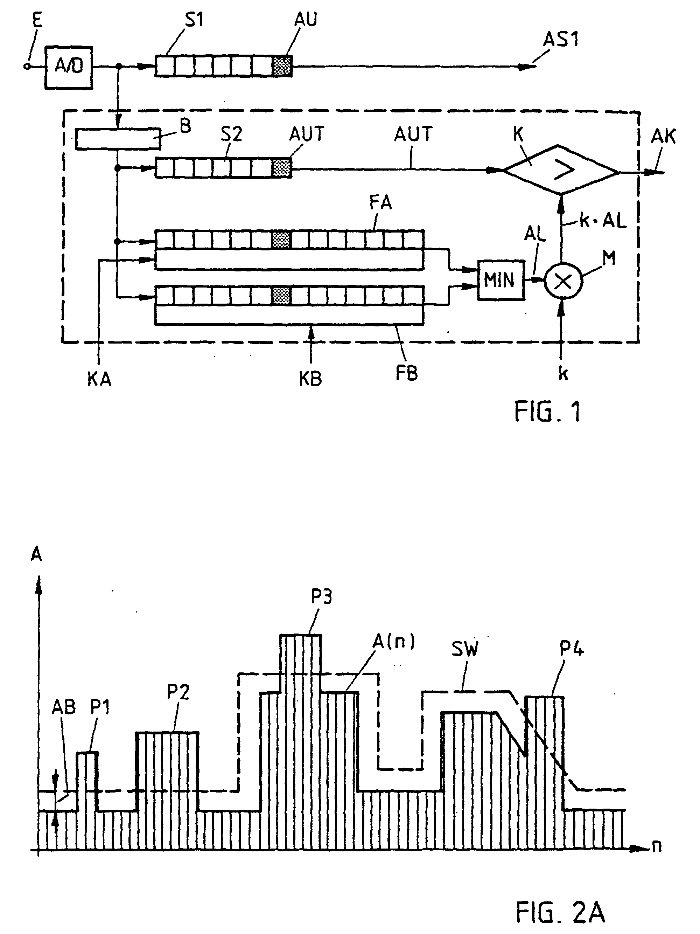

FIG. 1 zeigt eine schematisch dargestellte Schaltungsanordnung, wobei an dem Eingang E eines Analog-/Digital-Wandlers A/D ein komplexes analoges Eingangssignal anliegt. An dem Ausgang des Analog-/Digital-Wandlers A/D entsteht ein zugehöriges digital abgetastetes komplexwertiges Eingangssignal, das vorzugsweise aus zeitlich äquidistanten Abtastwerten besteht. Dabei ist der (Abtast-) Takt entsprechend dem Abtasttheorem gewählt. Dieses digitale Eingangssignal gelangt auf ein getaktetes erstes Schieberegister S1, das lediglich aus zeichnerischen Gründen 7-stufig ausgebildet ist und das lediglich als getaktete Verzögerungsleitung wirkt. Bei dem ersten Schieberegister S1 ist in dessen letzter Speicherzelle, der siebenten Stufe, ein sogenanntes Signal unter Test AU anliegend.

Dieses liegt gleichzeitig an am Ausgang, dem ersten Ausgang AS1, des ersten Schieberegisters S1. Bei diesem Signal unter Test AU soll geprüft werden, ob es einem kurzen Puls angehört, der sich über mehrere digitale Abtastwerte erstrecken kann. Diese Prüfung erfolgt mit einer Schaltungsanordnung, die mit einer gestrichelt dargestellten Linie umrahmt ist.

Entsprechend FIG. 1 gelangt das komplexwertige digitale Eingangssignal zunächst auf einen Betragsbildner B, dessen Ausgang mit dem Eingang eines zweiten Schieberegisters S2 und den Eingängen von zwei FIR-Filtern FA, FB verbunden ist. Das zweite Schieberegister S2 hat dieselbe Anzahl von Stufen, hier sieben, und dient ebenfalls lediglich als getaktetes Verzögerungsglied. Der Ausgang des zweiten Schieberegisters S2, an welchem das dem Signal unter Test AU entsprechende Betragssignal AUT anliegt, ist mit einem ersten Eingang eines Komparators K verbunden.

Die FIR-Filter FA, FB sind vorzugsweise, aber nicht notwendigerweise, gleich aufgebaut, was nachfolgend noch näher erläutert wird. Die FIR-Filter FA, FB besitzen eine Stufenzahl (hier vierzehn), die größer ist als diejenige der Schieberegister S1, S2. Die FIR-Filter FA, FB haben unterschiedliche Koeffizientensätze KA, KB, die über zugehörige Steuerleitungen entsprechend einer vorgebbaren Parametisierung vorgebbar und einstellbar sind, was nachfolgend noch näher erläutert wird. Die getakteten Ausgangssignale der FIR-Filter FA, FB werden den Eingängen eines Vergleichers MIN zugeführt, welcher das jeweils kleinere Signal (Minimum) AL ermittelt, das auch Amplitudenwertgröße genannt wird. Dieses wird einem ersten Eingang eines Multiplikators M zugeführt. Dessen zweiten Eingang wird ein vorgebbares Schwellwert-Multiplikator-Signal K (Wichtungsfaktor) zugeführt. Das Ausgangssignal k·AL (Amplituden-Schwellwert) des Multiplikators M wird einem zweiten Eingang des Komparators K zugeführt. Dieser prüft, ob das (Ausgangs-Amplituden-)Signal AUT (erster Eingang) größer ist als das Signal k·AL (zweiter Eingang). Wenn ja, entsteht am Kamparator-Ausgang AK ein Markierungssignal (Flag-Signal). Dieses und das Ausgangssignal AU des ersten Schieberegisters S1 sind an den Ausgängen AK sowie AS1 gleichzeitig vorhanden. Dabei kann ein zu detektierender Puls aus mehreren Abtastwerten bestehen. Das Signal k·AL entspricht einem (Amplituden-)Schwellwert SW, dessen zeitlicher Verlauf in FIG. 2A gestrichelt dargestellt ist, was nachfolgend noch näher erläutert wird.

FIG. 2A zeigt ein exemplarisches Betrags-Eingangssignal, das am Ausgang des Betragsbildners B (FIG. 1) anliegt. Dabei ist der Amplitudenwert A in Abhängigkeit von der Nummer n des Abtastwertes aufgetragen. Da die Abtastwerte zeitlich äquidistant ermittelt werden, kann die Abszisse auch als Zeitachse betrachtet werden. Der von der digitalen Zeit n abhängige Amplitudenverlauf A(n) kann aufgefaßt werden als eine Überlagerung von Rauschen und/oder zeitlich langen Pulsen mit zeitlich kurzen und mittellangen Pulsen P1 bis P4, die detektiert werden sollen.

Es ist nun in überraschender Weise möglich, die Parametrisierung (Koffezientensätze KA, KB, Schwellwert-Multiplikator k) derart zu wählen, daß der zeitliche Verlauf des Schwellwertsignales SW = k·AL den gestrichelt dargestellten Verlauf besitzt. Dieser zeichnet sich dadurch aus, daß immer ein bestimm- und einstellbarer Abstand AB zu dem Rauschen und zu den langen Pulsen eingehalten wird und daß der zeitliche Verlauf des Schwellwertsignales SW demjenigen des Rauschens und der langen Pulse entspricht. Bei einem solchen Schwellwertsignal SW sind die kurzen Pulse P1 und mittellangen Pulse P2 bis P4 zuverlässig dadurch detektierbar, daß zu jedem Abtastwert unter Test AU an dem Komparatorausgang AK ein zugehöriges Markierungssignal (Flag-Signal) entsteht. Dieses zeigt an, ob der am Ausgang AS1 anliegende Abtastwert unter Test AU zu einem zu detektierenden kurzen Puls P1 bis P4 gehört oder nicht.

Entsprechend der gewählten Parametrisierung (Koeffizientensätze KA, KB, Schwellwert-Multiplikator k) ist es möglich, die Länge der zu detektierenden Nutzpulse in weiten Bereichen zu variieren.

Dieses wird anhand der FIG. 2B, 2C näher erläutert. Diese haben eine Darstellung entsprechend FIG. 2A.

FIG. 2B, 2C zeigen jeweils denselben Verlauf der Abtastwerte A(n). Dieser enthält die Pulse P5, P5' sowie P6. Der Puls P5' ist zeitlich kürzer als Puls P5. Die Pulse P5, P5' sind kürzer als Puls 5. Die Pulse P5, P5' sind hier überlagert, das heißt, sie treten gleichzeitig auf.

Entsprechend FIG. 2B ist nun aufgrund einer ersten Parametrisierung A der Schwellwert SW derart gewählt, daß alle "kurzen" Pulse (Nutzpulse) P5, P5' sowie P6 detektiert werden.

Entsprechend FIG. 2C ist dagegen aufgrund einer zweiten Parametrisierung B der Schwellert SW derart gewählt, daß lediglich besonders kurze Pulse, nämlich die Pulse P5', P6 detektiert werden. Der Puls P5 wird unterdrückt.

Eine derart unterschiedliche Wahl des Schwellwertes SW entsprechend FIG. 2A bis 2C ist möglich durch eine entsprechende Wahl der Koeffizientensätze KA (für FIR-Filter FA) und KB (für FIR-Filter FB). Dabei können die Koeffizientensätze KA, KB in gewisser Weise als komplementär zueinander betrachtet werden, was anhand der FIG. 4 näher erläutert wird.

FIG. 4 zeigt eine schematische Darstellung der hier beispielsweise angenommenen vierzehnstufigen FIR-Filter FA, FB entsprechend FIG. 1. Dabei sind die Stufen von 0 bis 13 numeriert. In beiden FIR-Filtern FA, FB befindet sich das in FIG. 1 schraffiert dargestellte Signal unter Test AUT jeweils in der Stufe Nr. 6. Zu jeder Stufe gehört, entsprechend FIG. 3, ein Filterkoeffizient, nämlich zu Stufe Nr. 0 der Koeffizient hO, zu Stufe Nr. 1 der Koeffizient h1, und so weiter. Die jeweils zu einem FIR-Filter gehörenden Koeffizienten werden als Koeffizientensatz KA, KB (FIG. 1) bezeichnet.

Im folgenden wird angenommen, daß die Koeffizienten normiert sind, und zwar bezüglich aller Koeffizienten ungleich Null innerhalb eines FIR-Filters. Besteht dieses beispielsweise aus vierzehn Stufen und sind dabei lediglich acht Koeffizienten ungleich Null, so entspricht bei diesem FIR-Filter dem normierten Koeffizienten 1 der tatsächlich einzustellende (Einheits-)Koeffizient $1/8 = 0,125$, den man auch als Einheits-Multiplikationsfaktor bezeichnen kann.

In FIG. 4 sind bei jedem FIR-Filter FA, FB in jeder Stufe beispielhaft gewählte zugehörige normierte Koeffizienten eingetragen. Zu den FIR-Filtern FA, FB (FIG. 1) gehören also die beispielhaft gewählten Koeffizientensätze KA, KB mit

| KA | 1 | 1 | 1 | 0 | 0 | 0 | 0 | 0 | 0 | 0 | 0 | 1 | 1 | 1 |
|----|---|---|---|---|---|---|---|---|---|---|---|---|---|---|
| KB | 0 | 0 | 0 | 0 | 0 | 1 | 1 | 1 | 1 | 0 | 0 | 0 | 0 | 0. |

Aus dieser Darstellung ist ersichtlich, daß die (normierten) Koeffizienten des ersten FIR-Filters FA einen sogenannten äußeren Rahmen darstellen bezüglich der (normierten) Koeffizienten des zweiten FIR-Filters FB mit folgenden Eigenschaften

- die "1" (Koeffizienten ungleich Null) in beiden FIR-Filtern FA, FB dürfen sich nicht überlappen,

- die "O" (Koeffizienten gleich Null) in beiden Filtern dürfen sich überlappen (Stufen Nr. 3, 10 in FIG. 4),

- die "1" des zweiten FIR-Filters FB sind vorzugsweise zentriert angeordnet bezüglich der "1" (Rahmen) des ersten FIR-Filters FA.

Der (Koeffizienten-)Rahmen des ersten FIR-Filters FA umgibt also ein maximal nutzbares Fenster, das durch eine zeitliche Fensterlänge $R_{innen}$ gekennzeichnet ist. Diese beträgt in diesem Beispiel acht Stufen (Takte). Die detektierbaren kurzen Pulse haben eine Pulslänge P mit

$$1 \leq P \leq 2 \cdot R_{innen}.$$

Die normierten Koeffizienten in beiden FIR-Filtern können entsprechend den zu detektierenden kurzen Pulsen nahezu beliebig gewählt werden, das heißt, die Koeffizienten können nahezu beliebige positive reelle Zahlen sein. Damit ist es beispielsweise möglich, einen innerhalb des Fensters befindlichen kurzen Puls zu verstärken (Koeffizienten des zweiten FIR-Filters FB sind größer 1) und gleichzeitig die (zeitliche) Umgebung des Pulses abzuschwächen (Koeffizenten des ersten FIR-Filters FA sind kleiner 1).

Die vorstehend erwähnten Parameter k, KA, KB, die Anzahl der Speicherzellen in den Schieberegistern S1, S2, die Anzahl der Stufen der FIR-Filter sowie die für diese verwendete Taktfrequenz sind z.B. experimentell anpaßbar an ein zu erwartendes Eingangssignal, z.B. ein Radarsignal im Basisband (Videobereich).

Ein solcher Detektor für kurze Pulse, der auch SPD (Short Pulse Detector) genannt wird, ist in vielen Gebieten der Nachrichtentechnik einsetzbar, beispielsweise in der Radartechnik zur Zielerkennung (kurzer Puls P mit variabler Länge) in der Umgebung von Clutter.

Es ist ersichtlich, daß ein solcher Detektor vorteilhafter schnell an sich ändernde Situationen (Eingangssignale, zu detektierende kurze Pulse) anpaßbar ist, denn dazu muß lediglich die Parametrisierung (FIG. 2A bis 2C) geändert werden. Dabei sind beispielsweise vorgebbare Parametrierungen verwendbar, welche gespeichert sind und daher schnell abrufbar sind, beispielsweise bei sich ändernden Clutter-Situationen.

Die Erfindung ist nicht auf das beschriebene Ausführungsbeispiel beschränkt, sondern sinngemäß auf weitere anwendbar, beispielsweise zur Detektion kurzer Störpulse aber mit variabler Länge (sogenannter Glitches) in einer Pulsfolge, deren (Nutz-)Pulse dann als lange Pulse zu betrachten sind.

Derartige exemplarische Anwendungsfälle sind in der folgenden Tabelle zusammengestellt:

| zu detektierender kurzer und/oder mittlerer Puls | nicht zu detektierender langer Puls |
|---|---|
| Störpuls | Nutzpuls |
| Ziel | Clutter |
| Nutzpuls | Störpuls/Störumgebung |
| Fremdpuls | Eigenpuls |
| Eigenpuls | Fremdpuls. |

**Patentansprüche**

1. Digitales Verfahren zur Detektion zeitlich kurzer Pulse, wobei

   - ein Eingangssignal als Folge von getakteten Abtastwerten vorliegt,

   - bei jedem Abtastwert geprüft wird, ob dieser zu einem zu detektierenden Puls gehört, und

   - lediglich die Pulse, deren Pulslänge kleiner ist als ein zugehöriger vorgebbarer Pulslängen-Schwellwert und deren Pulshöhe größer ist als ein zugehöriger vorgebbarer Amplituden-Schwellwert, ermittelt werden, **dadurch gekennzeichnet,**

   - **dass** zu den Abtastwerten gehörende Amplitudenwerte (A(n)), die durch eine Betragsbildung erzeugt werden, mindestens zwei FIR-Filter (FA, FB) mit einer vorgebbaren Anzahl von Filter-Stufen zugeführt werden,

   - **dass** die FIR-Filter (FA, FB) jeweils unterschiedliche Koeffizientensätze (KA, KB) besitzen, wobei die Koeffizientensätze (KA, KB) der jeweiligen FIR-Filter (FA, FB) so eingestellt werden, dass sich in dem einen Koeffizientensatz (KA, KB) eine Fenstermaskierung und in dem anderen Koeffizientensatz (KB, KA) eine die Fenstermaskierung umgebende nicht überlappende Rahmenmaskierung ergibt,

   - **dass** die Amplitudenwerte (A(n)) gleichzeitig die Rahmen- und die Fenstermaskierung durchlaufen,

   - **dass** zu einem Amplitudenwert unter Test (AUT), dem eine vorgebbare Stelle innerhalb der Fenstermaskierung zugeordnet wird, durch eine Minimum-Selektion (MIN) zwischen der Rahmen- und der Fenstermaskierung eine Amplitudenwertgröße (AL) ermittelt wird,

   - **dass** die Amplitudenwertgröße (AL) mit einem vorgebbare Wichtungsfaktor (k) multipliziert wird, so dass der Amplituden-Schwellwert (SW) entsteht und

   - **dass** alle Abtastwerte, deren Amplitude größer ist als der Schwellwert (SW) gekennzeichnet werden.

2. Verfahren nach Anspruch 1, **dadurch gekennzeichnet, daß** die Koeffizientensätze (KA, KB) derart gewählt werden,

   - daß die in Stufen (Takten) gemessene vorgebbare Breite der Fenstermaskierung kleiner ist als die maximal nutzbare Fensterlänge ($R_{innen}$) der Rahmenmaskierung, und
   - daß die Fenstermaskierung zentriert angeordnet wird bezüglich der maximal nutzbaren Fensterlänge ($R_{innen}$).

3. Verfahren nach Anspruch 1 oder Anspruch 2, **dadurch gekennzeichnet, daß** die maximal nutzbare Fensterlänge ($R_{innen}$) gewählt wird entsprechend der Formel

$$1 \leq P \leq 2 \cdot R_{innen}$$

wobei P die in Takten (Stufen) gemessene Pulslänge der zu detektierenden Pulse bedeutet.

4. Verfahren nach einem der vorhergehenden Ansprüche, **dadurch gekennzeichnet, daß** zur Bildung des Schwellwertes (SW)

- zeitlich fortlaufend eine vorgebbare Anzahl von Amplitudenwerten in mindestens einem FIR-Filter (FA, FB) gespeichert und ausgewertet wird,

- die Amplitudenwerte gleichzeitig zeitlich fortlaufend in einer getakteten zweiten Verzögerungsleitung (S2) gespeichert werden und

- in der zweiten Verzögerungsleitung (S2) ein Amplitudenwert unter Test (AUT) ausgewählt wird mit einem Speicherplatz, der innerhalb der Fenstermaskierung des FIR-Filters (FB) liegt.

5. Verfahren nach einem der vorhergehenden Ansprüche, **dadurch gekennzeichnet, daß** der Speicherplatz für den Amplitudenwert unter Test (AUT) im wesentlichen in der Mitte der Fenstermaskierung des FIR-Filters (FB) liegt.

6. Verfahren nach einem der vorhergehenden Ansprüche **dadurch gekennzeichnet,**

- **daß** die Abtastwerte einer zeitlich getasteten ersten Verzögerungsleitung (S1) zugeführt werden,
- **daß** in der ersten Verzögerungsleitung (S1) ein Abtastwert unter Test (AU), welcher dem zugehörigen Amplitudenwert unter Test (AUT) zugeordnet ist, ausgewählt wird und
- **daß** der Abtastwert unter Test (AU) markiert wird, sofern sich dessen Zugehörigkeit zu einem zu detekierenden Puls ergibt.

7. Anordnung zur Durchführung des Verfahrens nach einem der vorhergehenden Ansprüche, **dadurch gekennzeichnet, daß** die getaktete erste Verzögerungsleitung (S1) und die getaktete zweite Verzögerungsleitung (S2) als getaktete Schieberegister ausgebildet sind mit jeweils einer Stufenzahl, die derart gewählt ist, daß ein Amplitudenwert unter Test (AUT) aus dem Bereich der Fenstermaskierung eines FIR-Filters (FA, FB) auswählbar ist.

8. Anordnung nach Anspruch 7, **dadurch gekennzeichnet, daß** die Anzahl der Stufen innerhalb eines FIR-Filters (FA) mindestens doppelt so groß ist wie die Stufenzahl der zweiten Verzögerungsleitung (S2).

9. Anordnung nach Anspruch 7 oder Anspruch 8, **dadurch gekennzeichnet,**

- **daß** an einem ersten Ausgang (AS1) der aus der ersten Verzögerungsleitung (S1) ausgewählte Abtastwert unter Test (AU) anliegt und
- **daß** an einem Komparator-Ausgang (AK) zeitgleich ein zu dem Abtastwert unter Test (AU) gehörendes Markierungssignal (Flag) anliegt, sofern der Abtastwert unter Test (AU) zu einem zu detektierenden Puls gehört.

**Claims**

1. Digital method for detection of short pulses, in which

- an input signal is present as a sequence of pulsed sample values,
- a check is carried out for each sample value to determine whether this belongs to a pulse to be detected, and
- only those pulses whose pulse length is shorter than an associated pulse length threshold value which can be predetermined and whose pulse magnitude is greater than an associated amplitude threshold value which can be predetermined are determined, **characterized**
- **in that** amplitude values (A(n)), which are associated with the sample values and are produced by magnitude formation are supplied to at least two FIR filters (FA, FB) having a number of filter stages which can be predetermined,

- **in that** the FIR filters (FA, FB) each have different coefficient sets (KA, KB), with the coefficient sets (KA, KB) of the respective FIR filters (FA, FB) being set such that this results in window masking in the first coefficient set (KA, KB) and in frame masking, which surrounds the window masking but does not overlap, in the second coefficient set (KB, KA),
- **in that** the amplitude values (A(n)) pass through the frame and window masking at the same time,
- **in that** an amplitude value variable (AL) is determined for an amplitude value under test (AUT) which is associated with a point, which can be predetermined, within the window masking, by means of a minimum selection (MIN) between the frame and the window masking,
- **in that** the amplitude value variable (AL) is multiplied by a weighting factor (k) which can be predetermined, thus producing the amplitude threshold value (SW), and
- **in that** all the sample values whose amplitude is greater than the threshold value (SW) are identified.

2. Method according to Claim 1, **characterized in that** the coefficient sets (KA, KB) are selected in such a way,

- that the width of the window masking, which can be predetermined and is measured in steps (clock cycles) is shorter than the maximum usable window length ($R_{internal}$) of the frame masking, and
- that the window masking is arranged centrally with respect to the maximum usable window length ($R_{internal}$).

3. Method according to Claim 1 or 2, **characterized in that** the maximum usable window length ($R_{internal}$) is selected using the formula

$$1 \leq P \leq 2 \cdot R_{internal},$$

where P is the pulse length which is measured in clock cycles (steps) of the pulses to be detected.

4. Method according to one of the preceding claims, **characterized in that**, in order to form the threshold value (SW),

- a number of amplitude values, which can be predetermined, are stored and evaluated, sequentially in time, in at least one FIR filter (FA, FB),
- the amplitude values are at the same time stored, sequentially in time, in a pulsed second delay line (S2), and
- an amplitude value under test (AUT) with a memory location which is located within the window masking of the FIR filter (FB) is selected in the second delay line (S2).

5. Method according to one of the preceding claims, **characterized in that** the memory location for the amplitude value under test (AUT) is essentially located in the centre of the window masking of the FIR filter (FB).

6. Method according to one of the preceding claims, **characterized**

- **in that** the sample values are supplied to a pulsed, first delay line (S1),
- **in that** a sample value under test (AU), which is associated with the associated amplitude value under test (AUT), is selected in the first delay line (S1), and
- **in that** the sample value under test (AU) is marked if it is associated with a pulse to be detected.

7. Arrangement for carrying out the method according to one of the preceding claims, **characterized in that** the pulsed first delay line (S1) and the pulsed second delay line (S2) are in the form of pulsed shift registers, each having a number of stages, which number is selected such that an amplitude value under test (AUT) can be selected from the region of the window masking of one FIR filter (FA, FB).

8. Arrangement according to Claim 7, **characterized in that** the number of stages within one FIR filter (FA) is at least twice as great as the number of stages in the second delay line (S2).

9. Arrangement according to Claim 7 or Claim 8, **characterized**

- **in that** the sample value under test (AU) which is selected from the first delay line (S1) is produced at a first output (AS1), and

- **in that** a marking signal (Flag) which is associated with the sample value under test (AU) is produced at the same time at a comparator output (AK), if the sample value under test (AU) is associated with a pulse to be detected.

**Revendications**

1. Procédé numérique destiné à la détection d'impulsions courtes par rapport au temps, dans lequel :

   - un signal d'entrée se présente en tant que séquence de valeurs de balayage rythmées,
   - on teste à chaque valeur de balayage si celle-ci est associée à une impulsion à détecter, et
   - on repère seulement les impulsions dont la longueur d'impulsion est plus petite qu'une valeur de seuil de longueur d'impulsion prédéterminable associée et dont la hauteur d'impulsion est plus grande qu'une valeur de seuil d'amplitude prédéterminable associée,

   **caractérisé**

   - **en ce que** des valeurs d'amplitude (A(n)) associées aux valeurs de balayage et générées par un dispositif formateur d'amplitude sont introduites dans au moins deux filtres FIR (FA, FB) présentant un nombre prédéterminable d'étages de filtre,
   - **en ce que** les filtres FIR (FA, FB) présentent chacun des jeux différents de coefficients (KA, KB), les jeux de coefficients (KA, KB) de chaque filtre FIR (FA,FB)étant adaptés de sorte qu'un masquage de fenêtre en résulte dans l'un des jeux de coefficients (KA, KB) et qu'un masquage d'encadrement entourant le masquage de fenêtre sans le chevaucher en résulte dans l'autre jeu de coefficients (KB,KA),
   - **en ce que** les valeurs d'amplitude (A(n)) parcourent simultanément le masquage d'encadrement et le masquage de fenêtre,
   - **en ce qu'**une grandeur de valeur d'amplitude (AL) est déterminée par rapport à une valeur d'amplitude sous test (AUT) à laquelle est affecté un endroit prédéterminable à l'intérieur du masquage de fenêtre, par une sélection du minimum (MIN) entre le masquage d'encadrement et le masquage de fenêtre,
   - **en ce que** la grandeur de valeur d'amplitude (AL) est multipliée avec un facteur de pondération (k) prédéterminable de façon que la valeur de seuil d'amplitude (SW) apparaisse et
   - **en ce que** toutes les valeurs de balayage dont l'amplitude est plus grande que la valeur de seuil (SW) sont marquées.

2. Procédé selon la revendication 1, **caractérisé en ce que** les jeux de coefficients (KA, KB) sont choisis de sorte que :

   - la largeur prédéterminable du masquage de fenêtre, mesurée en étapes (cycles) soit plus petite que la longueur de fenêtre maximalement utilisable ($R_{intérieur}$) du masquage d'encadrement et
   - le masquage de fenêtre soit disposé au centre de la longueur de fenêtre maximalement utilisable ($R_{intérieur}$)

3. Procédé selon la revendication 1 ou la revendication 2, **caractérisé en ce que** la longueur de fenêtre maximalement utilisable ($R_{intérieur}$) est choisie conformément à la formule

   $$1 \leq P \leq 2.R_{intérieur}$$

   dans laquelle P signifie la longueur d'impulsion des impulsions à détecter, mesurée en cycles (étapes).

4. Procédé selon l'une quelconque des revendications précédentes, **caractérisé en ce que** pour former la valeur de seuil (SW)

   - un nombre prédéterminable de valeurs d'amplitude est mémorisé et évalué dans au moins un filtre FIR (FA, FB) de façon continue dans le temps,
   - les valeurs d'amplitude sont mémorisées simultanément de façon continue dans le temps dans une seconde ligne à retard rythmée (S2) et
   - dans la seconde ligne à retard (S2) une valeur d'amplitude sous test (AUT) est sélectionnée avec un endroit de mémorisation qui se trouve à l'intérieur du masquage de fenêtre du filtre FIR (FB).

5. Procédé selon l'une quelconque des revendications précédentes, **caractérisé en ce que** l'endroit de mémorisation pour la valeur d'amplitude sous test (AUT) se trouve essentiellement au centre du masquage de fenêtre du filtre FIR (FB).

6. Procédé selon l'une quelconque des revendications précédentes, **caractérisé**

   - **en ce que** les valeurs de balayage sont introduites dans une premiére ligne à retard (S1) balayée dans le temps,
   - **en ce que** dans la première ligne à retard (S1) une valeur de balayage sous test (AU), laquelle est affectée à la valeur d'amplitude sous test (AUT) associée, est sélectionnée et
   - **en ce que** la valeur de balayage sous test (AU) est marquée pour autant que son association à une impulsion à détecter soit donnée.

7. Dispositif pour la réalisation du procédé selon l'une quelconque des revendications précédentes, **caractérisé en ce que** la première ligne à retard rythmée (S1) et la deuxième ligne à retard rythmée (S2) sont conformées comme registres à décalages rythmés présentant chacun un nombre d'étages qui est choisi de sorte qu'une valeur d'amplitude sous test (AUT) soit sélectionnable à partir de la zone de masquage de fenêtre d'un filtre FIR (FA, FB).

8. Dispositif selon la revendication 7, **caractérisé en ce que** le nombre d'étages à l'intérieur d'un filtre FIR (FA) est au moins deux fois aussi grand que le nombre d'étages de la seconde ligne à retard (S2).

9. Dispositif selon la revendication 7 ou la revendication 8, **caractérisé**

   - **en ce que** à la première sortie (AS1) se présente la valeur de balayage sous test (AU) sélectionnée à partir de la première ligne à retard (S1) et
   - **en ce que** simultanément à une sortie de comparateur (AK) se présente un signal de marquage (indicateur) associé à la valeur de balayage sous test (AU) pour autant que la valeur de balayage sous test (AU) soit associée à une impulsion à détecter.

FIG. 1

FIG. 2A

FIG.2B

FIG.2C

FIG.3

FIG.4

11